# EUROPÄISCHE PATENTSCHRIFT

(11) **EP 3 573 160 B1**
(45) Veröffentlichungstag und Bekanntmachung des Hinweises auf die Patenterteilung: **17.02.2021**
(21) Anmeldenummer: 18173615.8
(22) Anmeldetag: 22.05.2018
(51) Int. Cl.: H01M 8/12, H01M 8/04014, H01M 8/04007

(54) **GASKREISLAUFSYSTEM FÜR DEN WÄRMETRANSPORT**
GAS CIRCUIT SYSTEM FOR HEAT TRANSPORT
SYSTÈME DE CIRCULATION DE GAZ POUR LE TRANSPORT DE CHALEUR

(43) Veröffentlichungstag der Anmeldung: 27.11.2019
(73) Patentinhaber: Helmholtz-Zentrum Geesthacht Zentrum für Material- und Küstenforschung GmbH, 21502 Geesthacht (DE)
(72) Erfinder: Bellosta von Colbe, José M., 21465 Wentorf (DE); Klassen, Thomas, 21465 Wentorf (DE); Dornheim, Martin, 21391 Reppenstedt (DE); Capurso, Giovanni, 20129 Hamburg (DE); Taube, Klaus, 22549 Hamburg (DE)
(74) Vertreter: Uexküll & Stolberg

(56) Entgegenhaltungen:
- EP-A1- 1 754 880
- EP-A1- 2 756 536
- DE-A1-102006 002 882

## Beschreibung

### TECHNISCHES GEBIET

Die Erfindung betrifft ein Gaskreislaufsystem für den Transport von Wärme von einer Wärmequelle, insbesondere einer Hochtemperaturquelle, wie einer Hochtemperaturbrennstoffzelle, zu einem Wärmeverbraucher, wobei das Gaskreislaufsystem ein Rohrsystem umfasst, durch das ein gasförmiges Wärmeaustauschmedium strömt. Ein Teil des Rohrsystems ist als Wärmetauscher ausgebildet, in dem Wärme aus der Wärmequelle in das Wärmeaustauschmedium übertragen wird. Ein anderer Teil des Rohrsystems ist als Wärmesenke ausgebildet. Hier kann die auf das Wärmeaustauschmedium übertragene Wärme bei Bedarf auf einen Wärmeverbraucher übertragen werden, oder die Wärmesenke ist als Wärmetauscher ausgebildet.

### HINTERGRUND DER ERFINDUNG

Die Diskussion um zukünftige ökologisch wie ökonomisch aussichtsreiche Energiewirtschaft konzentriert sich seit einigen Jahren immer stärker auf effiziente Lösungen auch für den Transport von Wärme, bei dem hohe Verluste auftreten können. Die Entwicklungen finden dabei in verschiedenen technischen Branchen statt, beispielsweise im Bereich der industriellen oder privaten Kraft-Wärme-Kopplung oder im Automobilsektor, jeweils mit dem Ziel, eine Effizienzsteigerung des Gesamtprozesses zu erhalten.

Im Bereich der Energieerzeugung hat man seit einigen Jahren das Potential der Brennstoffzellentechnologie erkannt und bemüht sich, aus diesen Strom und Wärme zu gewinnen und effektiv zu nutzen. Brennstoffzellen sind galvanische Zellen, die die chemische Reaktionsenergie eines kontinuierlich zugeführten Brennstoffes und eines Oxidationsmittels bei gleichzeitiger Entstehung von Wärme in elektrische Energie wandeln. Festoxidbrennstoffzellen (Solid Oxide Fuel Cell, SOFC) sind Hochtemperaturbrennstoffzellen, die bei einer Betriebstemperatur von 650-1000°C betrieben werden und die aufgrund ihres hohen Wirkungsgrads und niedriger Schadstoffemissionen hervorragend für die kombinierte Strom- und Wärmeerzeugung geeignet sind.

Zur Speicherung des Brennstoffes haben sich Metallhydridspeicher als besonders geeignet herausgestellt. Diese Metallhydridspeicher arbeiten bei sehr niedrigen Betriebsdrücken. Das macht den Speicher sicher und kompakt. Das Speichern von Brennstoffen, wie Wasserstoff, in Metallhydriden erlaubt eine weitestgehend verlustfreie Speicherung über einen langen Zeitraum ohne zusätzlichen Energieaufwand, da das Gas chemisch gebunden ist und nicht entweichen kann. Auch für die Sicherheit sind Metallhydridspeicher wesentlich geeigneter als Druckgas- oder Flüssigwasserstoffspeicher, da der Wasserstoff nicht explosionsartig entweichen kann.

Neue Entwicklungen gehen dazu über, die Brennstoffzelle thermisch mit dem Metallhydridtank zu koppeln. Einer der Gründe hierfür besteht darin, dass die Dehydrierung - also die Freisetzung von Wasserstoff aus dem Hydrid - eine wärmeverbrauchende Reaktion ist. Die Abwärme der Brennstoffzelle kann also dazu genutzt werden, um die chemische Dehydrierung zu initiieren und damit den Wasserstoff freizusetzen, der dann in der Brennstoffzelle zu Elektroenergie umgewandelt wird.

Für den Transport von Wärme von einer Wärmequelle zu einem Wärmeverbraucher (oder -speicher) ist es bereits bekannt, ein Gasstromsystem zu nutzen, bei dem ein in einem Rohrsystem strömendes Wärmeaustauschmedium durch die Wärmequelle erwärmt wird und diese Wärme an den Verbraucher abgibt. Für die jeweilige Wärmeübertragung werden Wärmetauscher verwendet. Um den Gasstrom im Fluss zu halten, sind Hochtemperaturgebläse notwendig. Diese Gebläse sind jedoch teuer und aufgrund der beweglichen Teile sehr verschleiß- und störanfällig. Problematisch wird es, wenn Feststoffe in der Gasleitung auftreten. Diese können zu Beschädigungen der beweglichen Teile führen.

DE 10 2006 002 882 offenbart einen Kühlkreislauf 7 zum Kühlen von Kathodenabluft, der zwei Wärmetauscher und eine Venturidüse umfasst.

### ZUSAMMENFASSUNG DER ERFINDUNG

Aufgabe der Erfindung ist es, Wartungs- und Verschleißanfälligkeit des Gaskreislaufsystems zu reduzieren und dessen Effizienz zu steigern.

Diese Aufgabe wird durch ein Gaskreislaufsystem mit den Merkmalen des Anspruchs 1 gelöst.

Erfindungsgemäß ist vorgesehen, dass in dem Rohrsystem ein oder mehrere nach dem Coand 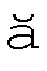 -Effekt und/oder dem Venturi Effekt arbeitende Gasströmungsverstärker vorgesehen sind, um auf die Gasströmung einzuwirken. Der Gasströmungsverstärker wird aus einer Impulsgasleitung mit unter Druck stehendem Impulsgas gespeist, um das Wärmeaustauschmedium in einer Strömungsrichtung anzutreiben, also das gasförmige Wärmeaustauschmedium in der beabsichtigten Strömungsrichtung zu beschleunigen bzw. den Gasstrom anzutreiben.

Durch den Gasströmungsverstärker kommt das Wärmetransportsystem ohne bewegliche Teile aus, kann ohne Probleme sehr hohe Temperaturen ausgesetzt werden und ist weniger störanfällig und dazu kosteneinsparend. Auch die Wartungsmaßnahmen sind weniger umfangreich. Über den Wärmetauscher wird die Wärme von der Wärmequelle aufgenommen und an das darin strömende Wärmeaustauschmedium abgegeben. Das Wärmeaustauschmedium strömt weiter bis zu der Wärmesenke, die einen räumlich begrenzten Bereich oder Körper kennzeichnet, wo die thermische Energie in dem Wärmeaustauschmedium wieder nach außen abgegeben wird, beispielweise an den Wärmeverbraucher. Die Wärmesenke kann hierzu als Wärmetauscher ausgebildet sein.

Der Gasströmungsverstärker kann auf dem Coandä-Effekt beruhen. Derartige Strömungsverstärker sind aus dem Stand der Technik auch unter dem Begriff "air amplifier" bekannt. Der Coand 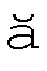 -Effekt beschreibt die Tendenz einer Gasströmung, an einer konvexen Oberfläche entlang zu laufen, anstatt sich abzulösen und in der ursprünglichen Strömungsrichtung weiterzubewegen. Der Gasströmungsverstärker umfasst hierzu einen Düsenkörper mit einem Strömungskanal, der einen ringförmigen Spalt an seiner Innenoberfläche aufweist. Der ringförmige Spalt wird aus einer in dem Düsenkörper ausgebildeten Ringkammer mit dem unter Druck stehendem Impulsgas gespeist. Der Strömungskanal bildet in Strömungsrichtung, also in axialer Richtung des Gasströmungsverstärkers oder des Strömungskanals gesehen, in Anschluss an den ringförmigen Spalt eine Coandä-Leitfläche aus, die derart konfiguriert ist, dass der Impulsgasstrom in Strömungsrichtung umgelenkt wird. Die Coandä-Leitfläche ist in Strömungsrichtung (oder axialer Richtung des Strömungskanals) gesehen hinter dem Auslass für das Impulsgas angeordnet. Die Coandä-Leitfläche ist dadurch gekennzeichnet, dass sie von dem ringförmigen Spalt ausgehend zumindest teilweise schräg zur Mittelachse des Düsenkörpers, bzw. schräg zur Strömungsrichtung des Wärmeaustauschmediums verläuft. Durch den Coand 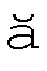 -Effekt strömt das Impulsgas nicht radial auf die Mittelachse des Düsenkörpers zu, sondern wird durch die Coandä-Leitfläche axial umgelenkt. Dadurch entsteht im Zentrum des Gasströmungsverstärkers ein Unterdruck, der das Wärmeaustauschmedium in axialer Richtung "mitreißt" und dieses beschleunigt.

Alternativ oder in Kombination mit strukturellen Merkmalen zum Erzielen eines Coandä-Effekts kann der Gasströmungsverstärker auf dem Venturi-Effekt basieren. Venturi-Düsen sind aus dem Stand der Technik bekannt und umfassen: eine Einlassdüse, die durch das Impulsgas gespeist wird, eine Mischkammer und eine Fangdüse, wobei die Einlassdüse durch die Mischkammer auf die Fangdüse gerichtet ist und die Mischkammer einen Einlass aufweist, der an einen Auslass des Rohrsystems angeschlossen ist. Die Fangdüse ist an einen Einlass des Rohrsystems (Austritt der Venturi-Düse) angeschlossen, so dass die Venturi-Düse mit Einlass und Auslass in das Rohrsystem integriert ist. Solche Gasströmungsverstärker sind auch unter dem Namen Strahlpumpe bekannt. Das aus der Einlassdüse kommende Impulsgas erzeugt in der Mischkammer eine Pumpwirkung, wodurch das Wärmeaustauschmedium durch den Einlass der Mischkammer angesaugt, beschleunigt und aus der Fangdüse in das Rohrsystem befördert wird.

Nach einer weiteren Ausführungsform der Erfindung ist die Coand 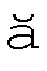 -Leitfläche in Strömungsrichtung gekrümmt ausgebildet. Das bedeutet, die Coand 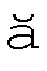 -Leitfläche besitzt eine konvexe Oberfläche, die zunächst, ausgehend vom Auslass für das Impulsgas, in Richtung Mittelachse des Düsenkörpers verläuft, dann aber zunehmend in einer Richtung parallel zur Mittelachse abfällt.

Eine weitere Ausführungsform der Erfindung sieht vor, dass der Gasströmungsverstärker in Strömungsrichtung des Wärmeaustauschmediums eine Eintrittsöffnung mit einer Eintrittsquerschnittsfläche aufweist, die sich in axialer Richtung insbesondere konisch bis zu einer Querschnittsverengung mit einer minimalen Durchtrittsfläche verjüngt. In diesem Düsenabschnitt kommt es bereits zu einer Beschleunigung des Wärmeaustauschmediums. Der Ringspalt schließt vorzugsweise an die Querschnittsverengung an, so dass die anschließende Beschleunigung des Wärmeaustauschmediums durch den Impulsgasstrom besonders effektiv ist.

Nach einer weiteren Ausführungsform der Erfindung schließt sich in Strömungsrichtung an die Coandä-Leitfläche ein Abschnitt mit sich in Strömungsrichtung erweiterndem Innendurchmesser an.

Erfindungsgemäß ist das Wärmetransportsystem als Kreislauf vorgesehen. Hierbei kann der Gasströmungsverstärker in Strömungsrichtung des Wärmeaustauschmediums vor oder hinter dem Wärmequellen-Wärmetauscherabschnitt angeordnet sein. Es ist aber durchaus denkbar, eine Mehrzahl an Gasströmungsverstärkern im Rohrsystem vorzusehen, um eine gleichbleibende Gasströmung zu gewährleisten.

Vorzugsweise ist der Gasströmungsverstärker in Strömungsrichtung vor der Wärmequelle angeordnet, um die Wärmebelastung gering zu halten. Ein weiterer Vorteil besteht darin, dass der Impulsgasstrom weniger hoch vorgeheizt werden muss, so dass auch die Größe des Wärmetauschers für das Vorwärmen des Impulsgases minimiert werden kann.

Das Wärmeaustauschmedium kann Luft oder ein anderes geeignetes gasförmiges Medium sein.

Das Gaskreislaufsystem kann in besonders vorteilhafter Weise als Wärmeabfuhrsystem für Hochtemperaturbrennstoffzellensysteme verwendet werden. Es hat sich gezeigt, dass die Abfuhr von Wärme, insbesondere von Batteriewärme, insbesondere von Hochtemperaturbrennstoffzellen, wie einer Festoxidbrennstoffzelle (englisch: solid oxide fuel cell, SOFC-Brennstoffzelle), mittels des geschlossenen Gaskreislaufsystems einen hohen Wirkungsgrad aufweist

Eine weitere Ausführungsform der Erfindung sieht vor, dass ein Abgasstrom der Hochtemperaturbrennstoffzelle über den Wärmetauscher geführt ist. Auf diese Weise kann die thermische Energie der Brennstoffzelle effizient genutzt werden.

Nach einer weiteren Ausführungsform der Erfindung ist vorgesehen, dass ein Metallhydridtank an die Wärmesenke angeschlossen ist, so dass Wärme zwischen dem Wärmeaustauschmedium und dem Metallhydridtank ausgetauscht werden kann. Für eine thermische Kopplung von Wärmesenke und Metallhydridtank können zumindest ein Abschnitt des Metallhydridtanks und/oder Wärmesenke zwecks effizienten Wärmeaustauschs als Wärmetauscher ausgebildet sein. Die Wärme der Brennstoffzelle kann so effizient in den Metallhydridtank geleitet und dort für die Freisetzung des Brennstoffs genutzt werden. Das erhöht den Gesamtwirkungsgrad des Systemverbunds Brennstoffzelle-Metallhydridtank. Alternativ kann ein weiterer Wärmetauscher zwischen Wärmesenke und Metallhydridtank angeordnet sein, um die Wärme zwischen beiden auszutauschen. Ein solcher zusätzlicher Wärmetauscher kann insbesondere auf einem flüssigen Wärmeaustauschmedium basieren. Das im Gegensatz zum Gasstrom flüssige Austauschmedium hat den Vorteil, dass bei entsprechend hoher Fließgeschwindigkeit die Flüssigkeit nicht so intensiv aufgewärmt wird und dadurch Probleme, die mit den hohen Temperaturen verbunden sein können (z.B. Materialschwächung bzw. Zersetzung des Wärmeträgers), vermieden werden.

Grundsätzlich kann das System über mehrere Wärmesenken bzw. Kopplungsabschnitte für Wärmeverbraucher verfügen. Grundsätzlich können auch mehrere Metallhydridtanks an das System angeschlossen sein.

Eine weitere Ausführungsform der Erfindung sieht vor, dass in dem Rohrsystem ein Gas- bzw. Lufterhitzer vorgesehen ist. Der Lufterhitzer kann beispielsweise ein Elektrorohrerhitzer sein. Mittels des Lufterhitzers kann das Wärmeaustauschmedium aufgeheizt werden, um so eventuelle Wärmeverluste zu kompensieren. Ferner kann der Lufterhitzer dazu genutzt werden, das System hoch zu fahren, bzw. auf Betriebstemperatur zu bringen. Insbesondere wenn die Hochtemperaturquelle noch nicht ausreichend Wärme liefert, kann die über den Lufterhitzer (oder Gaserhitzer) erzeugte Wärme über den Abschnitt des Rohrsystems, der mit dem Metallhydridtank thermisch gekoppelt ist, in den Metallhydridtank eingebracht werden.

Erfindungsgemäß ist vorgesehen, dass ein unter Druck stehender Impulsgasstrom in den Gasströmungsverstärker geleitet wird, um den Gasstrom in Axialrichtung mitzureißen. Um den Impulsgasstrom vorzuwärmen und eventuelle Wärmeverluste einzuschränken / zu kompensieren, sieht eine weitere Ausführungsform der Erfindung Mittel zum Vorwärmen des Impulsgasstroms vor. Diese Mittel können zwischen der Quelle des Impulsgasstroms und dem Gasströmungsverstärker vorgesehen sein. Hierzu können ein Wärmetauscher oder ein Elektrorohrerhitzer dienen.

Gemäß einer weiteren Ausführungsform der Erfindung umfasst das Rohrsystem einen Auslass, um einen Teil des gasförmigen Wärmeaustauschmediums aus dem System abzulassen. Mittels des Auslasses lässt sich beispielsweise eine temperaturbedingte Druckerhöhung im Gaskreislaufsystem kompensieren. Vor allem aber kann der Auslass dazu genutzt werden, eine Ansammlung von Gas im Rohrsystem zu vermeiden. Eine solche Ansammlung kann zu einer Druckerhöhung führen und damit potentiell auch den Impulsgasstrom beeinträchtigen, wenn der Druck zu hoch wird, so dass kein Impuls mehr übertragen werden kann. Für diese Ausführungsform ist vorzugsweise ferner vorgesehen, dass ein über den Auslass abführbarer Strom des Wärmeaustauschmediums dazu genutzt wird, den Impulsgasstrom zu wärmen. Hierzu kann der Auslass des Rohrsystem, durch den Wärmeaustauschmedium aus dem Rohrsystem abgelassen werden kann, mit den Mitteln zum Vorwärmen des Impulsgasstroms, die in Form eines Wärmetauschers bereitgestellt sein können, verbunden sein, so dass die Wärme des über den Auslass abgeführten Wärmeaustauschmediums auf das Impulsgas übertragen werden kann, um dieses vorzuwärmen.

Gemäß einer weiteren Ausführungsform der Erfindung kann der Auslass als alternative oder zusätzliche Maßnahme zum Vorwärmen des Impulsgasstroms auch dazu genutzt werden, das abgelassene Wärmeaustauschmedium als Impulsgas in das Kreislaufsystem rückzuführen. Nach dieser Ausführungsform ist der Gasströmungsverstärker mit der Impulsgasleitung zum Zuführen von Impulsgas in den Gasströmungsverstärker verbunden. Das Rohrsystem weist einen Auslass auf, um Wärmeaustauschmedium aus dem Rohrsystem abzuführen, wobei der Auslass mit der Impulsgasleitung verbunden ist, so dass das aus dem Auslass abgeführte Wärmeaustauschmedium als Impulsgas wieder in das Rohrsystem eingespeist werden kann. Vorzugsweise wird das aus dem Auslass abgelassene Wärmeaustauschmedium durch einen Verdichter (Kompressor) geleitet, um es als unter Druck stehendes Impulsgas in das Rohrsystem wieder einzuführen.

Wie bereits erläutert, kann die Rückführung des Wärmeaustauschmediums in den Impulsgasstrom mit den Mitteln zum Vorwärmen des Impulsgasstroms kombiniert werden. Eine weitere Ausführungsform der Erfindung sieht daher vor, dass die Mittel zum Vorwärmen des Impulsgasstroms derart an die Impulsgasleitung angeschlossen sind, dass das aus dem Auslass abgeführte Wärmeaustauschmedium zunächst Wärme an den Impulsgasstrom abgibt und dann in Strömungsrichtung des Impulsgases in einem Abschnitt vor den Mitteln zum Vorwärmen des Impulsgasstroms in die Impulsgasleitung geleitet wird, wobei das Wärmeaustauschmedium vorzugsweise über einen Verdichter in die Impulsgasleitung eingeführt wird. Bei dieser Ausführungsform wird das Wärmeaustauschmedium zunächst über die Mittel zum Vorwärmen des Impulsgasstroms geführt und wird anschließend in die Impulsgasleitung eingespeist und strömt dann als Impulsgas durch die Mittel zum Vorwärmen des Impulsgasstroms, um wieder aufgewärmt zu werden. Vorzugsweise ist vor den Mittel zum Vorwärmen des Impulsgasstroms ein Verdichter angeordnet, um den Druck des rückgeführten Wärmaustauschmediums zu erhöhen und dieses als Impulsgas in das Rohrsystem wieder einzuspeisen. Dadurch, dass zunächst Wärme aus dem Wärmeaustauschmedium genommen wird, bevor dieses durch den Verdichter strömt, sind die resultierenden Wärmebelastungen für den Verdichter geringer und dieser kann kleiner dimensioniert werden. Dies trägt auch in einem erheblichen Maße zur Kosteneffizienz bei. Nach Verlassen des Verdichters wird das nun als Impulsgas weitergeführte Wärmeaustauschmedium durch das aus dem Auslass rückgeführte Wärmeaustauschmedium wieder aufgewärmt.

Der Auslass, der dazu dient, einen Teil des gasförmigen Wärmeaustauschmediums aus dem System abzulassen, kann je nach Anforderung im System platziert werden. Wird der Auslass beispielsweise in Strömungsrichtung des Gases hinter dem Wärmetauscher, der an die Hochtemperaturquelle angeschlossen ist, platziert, ist die auf den Impulsgasstrom übertragbare Wärmemenge besonders hoch. Wird der Auslass dagegen in Strömungsrichtung des Gases vor dem Wärmetauscher platziert, wird dem Hauptkreislauf nach Durchströmen des Gasströmungsverstärkers wieder ein Teil des Impulsgases entzogen, so dass dieser im Wärmetauscher nicht aufgewärmt werden muss. Dadurch kann der Wärmetauscher kleiner dimensioniert werden.

Eine weitere Ausführungsform der Erfindung umfasst Grenzwerte für den Betriebsdruck des Systems. So ist vorgesehen, dass der Druck des Wärmeaustauschmediums im Betrieb unter 3 bar, vorzugsweise unter 1,5 bar, beträgt.

Nach einer weiteren Ausführungsform der Erfindung liegt der Impulsgasstrom unter 150 Nl/min (Nl/min = Norm-Volumenstrom). Der maximale Strom des Wärmeaustauschmediums beträgt vorzugsweise 1500 Nl/min. Das System weist bei diesen Betriebsparametern eine besonders hohe Effizienz auf. Diese Werte gelten insbesondere für eine 1 kW Brennstoffzelle. Die Erfindung gilt aber ausdrücklich auch für Brennstoffzellen mit anderen Leistungswerten. Die Anpassung der Betriebsparameter "Impulsgasstrom" und "maximaler Strom des Wärmeaustauschmediums" können durch den Fachmann mittels einfacher Leistungsmessungen eingestellt werden.

Erfindungsgemäß können in dem Rohrsystem eine Reihe von Druck- und Temperatursensoren sowie Durchflussmesser vorgesehen sein, die den Druck und die Temperatur und den Volumenstrom des Wärmeaustauschmediums überwachen und ggf. steuern.

Wie bereits einleitend erwähnt, hat sich herausgestellt, dass das Gaskreislaufsystem nicht nur für die Wärmeabfuhr bei Batterie- und Brennstoffzellensystemen vorteilhaft ist. Die Einsatzmöglichkeiten des Gaskreislaufsystems sind ausdrücklich nicht nur auf dieses Einsatzgebiet beschränkt, sondern sind vielfältig. Da das System ohne bewegliche Teile auskommt, eignet es sich vor allem für Gasströme, in denen Feststoffe schweben, beispielsweise Gas aus der Kohleverbrennung. Eine andere Anwendung ist die Stromerzeugung mittels Solarkonzentratoren. Dort wird die Sonnenenergie durch viele Spiegel auf einen Kollektor (normalerweise auf einem Turm angeordnet) konzentriert, wodurch Temperaturen von mehreren tausend Grad Celsius erreicht werden. Um die Wärme aus diesem Kollektor abzuführen, sind beständige Wärmeträger notwendig. Hierzu eignen sich vor allem gasförmige Medien, wie Luft oder Helium. In diesem Einsatzgebiet ist die vorliegende Erfindung effizient einsetzbar.

### FIGURENBESCHREIBUNG

Weitere Merkmale, Vorteile und Anwendungsmöglichkeiten der vorliegenden Erfindung ergeben sich aus der nachfolgenden Beschreibung eines Ausführungsbeispiels anhand der Zeichnungen.

Es zeigen:
- Fig. 1: schematisch einen Gaskreislauf nach einer ersten Ausführungsform der Erfindung; und
- Fig.2: in einer Schnittansicht einen Teil des Gaskreislaufs aus Figur 1.

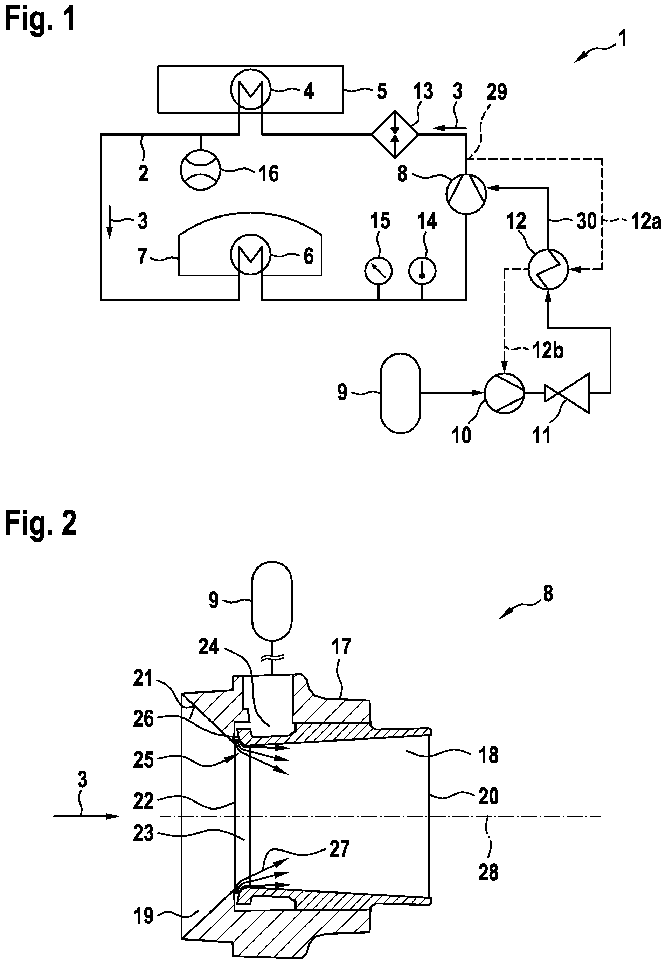

**Figur 1** zeigt schematisch einen erfindungsgemäßen Gaskreislauf in Verbindung mit einer Hochtemperaturbrennstoffzelle und einem Metallhydridtank.

Das Gaskreislaufsystem 1 umfasst ein Rohrsystem 2, durch das ein Wärmeaustauschmedium in Form von Gas strömt. Das System ist als Kreislauf ausgebildet, und die Luft strömt entlang der Strömungsrichtung 3. Ein Teil des Rohrsystems 2 ist als erster Wärmetauscher 4 ausgebildet. Der Wärmetauscher 4 ist an eine Hochtemperaturbrennstoffzelle in Form einer SOFC-Brennstoffzelle oder Schmelzkarbonatbrennstoffzelle (engl. Molten Carbonate Fuel Cell, MCFC) oder Phosphorsäurebrennstoffzelle (engl. Phosphoric Acid Fuel Cell, PAFC) 5 angeschlossen. Durch die thermische Kopplung zwischen Wärmetauscher 4 und SOFC-Brennstoffzelle 5 kann Wärme aus der SOFC-Brennstoffzelle 5 in den Wärmetauscher 4 abgegeben werden und wird dort auf das den Wärmetauscher 4 durchströmende Wärmeaustauschmedium übertragen.

Beabstandet von dem Wärmetauscher 4 umfasst das Gaskreislaufsystem 1 eine Wärmesenke 6 für den Wärmeaustausch mit einem Wärmeverbraucher 7. Die Wärmesenke 6 wird bei dem gezeigten Ausführungsbeispiel in Form eines zusätzlichen Wärmetauschers bereitgestellt. Der zusätzliche Wärmetauscher 6 ist an einen Metallhydridtank 7 (Wärmeverbraucher) angeschlossen und mit diesem thermisch gekoppelt. In dem zusätzlichen Wärmetauscher 6 wird die Wärme des heißen Wärmeaustauschmediums auf den Metallhydridtank 7 übertragen. Der Wärmeaustauschmedium kann aber auch direkt den Tank erwärmen, wenn es entsprechend ausgelegt ist, z. B. als Doppel- oder Multirohrsystem.

Durch die Wärmequelle (Eintrag von Wärme in das System) und die Wärmesenke (Abfuhr von Wärme aus dem System) entsteht im Rohrsystem aufgrund von thermischen Dichteunterschieden bereits eine Grundströmung (natürliche Konvektion). Um das Wärmeaustauschmedium in Strömungsrichtung 3 zu beschleunigen, ist ein Gasströmungsverstärker 8 in den Kreislauf integriert. Grundsätzlich sind verschiedene Formen von Gasströmungsverstärkern möglich, so auch Strahlpumpen oder dergleichen.

Der hier eingesetzte Gasströmungsverstärker 8 umfasst einen Strömungskanal mit einer Eintrittsöffnung mit einer Eintrittsquerschnittsfläche, die sich in axialer Richtung des Pumpenkörpers konisch bis zu einer Querschnittsverengung mit einer minimalen Durchtrittsfläche verjüngt. Unmittelbar vor dieser engsten Stelle des Strömungskanals befindet sich ein ringförmiger Spalt, der aus einer unter Überdruck stehenden Ringkammer mit Druckgas aus einer Druckgasquelle 9 gespeist wird. Dieser "Hilfsgasstrom" (auch "Impulsgasstrom" genannt) tritt in die Ringkammer ein und wird durch eine Coand 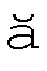 -Leitfläche, die mit Bezug auf Figur 2 näher erläutert wird, in axiale Richtung umgelenkt und strömt durch den Coand 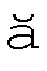 -Effekt an der Wandung des Strömungskanals entlang. Die strömende Luft verursacht dabei im Strömungskanal einen Gasstrom, der das in axialer Richtung vor dem Spalt liegende Wärmeaustauschmedium ansaugt und mitreißt. Die Leitung 30, die der Versorgung des Gasströmungsverstärkers 8 mit Impulsgas dient, wird als Impulsgasleitung bezeichnet.

Die Impulsgasleitung 30 umfasst neben der Druckluftquelle 9 einen Verdichter 10 und ein Steuerungsventil 11. Um die Wärmeverluste des System möglichst gering zu halten, umfasst die Hilfsgasleitung auch ein Vorwärmelement 12 in Form eines zusätzlichen Wärmetauschers, der an das Rohrsystem 2 anschließbar ist, um den Impulsgasstrom aufzuheizen.

Desweiteren ist zwischen dem Gasströmungsverstärker 8 und dem Wärmetauscher 4 ein Elektrorohrerhitzer 13 vorgesehen, um im Betrieb eventuell auftretende Wärmeverluste zu kompensieren.

Das System umfasst neben Temperaturmessern 14 und Druckmessern 15 auch Volumenstrommessegeräte 16, um die Systemparameter zu kontrollieren und ggf. auf Sollwerte einzuregeln.

Im Betrieb erzeugt der Gasströmungsverstärker 8, gespeist mit Druckluft aus der Impulsgasleitung 30 von der Druckluftquelle 9, eine Luftströmung des Wärmeaustauschmediums in Strömungsrichtung 3. Im Wärmetauscher 4 kommt es zum Wärmeaustausch mit der SOFC-Brennstoffzelle 5 und das Wärmeaustauschmedium wird aufgeheizt. Das Wärmeaustauschmedium strömt dann zum Metallhydridtank 7, wo die Wärme über den Wärmetauscher 6 an den Metallhydridtank 7 abgegeben wird. Der Metallhydridtank 7 nutzt die Wärme zur Freisetzung des Brennstoffs für die SOFC-Brennstoffzelle 5.

Der Impulsgasstrom von der Druckluftquelle 9 ist so gewählt, dass nur eine kleine Menge Gas in das Gaskreislaufsystem 1 hineinpumpt wird. Um eine Ansammlung von Gas und eine sicherheitsrelevante Druckerhöhung im Rohrsystem 2 zu vermeiden, wird eine äquivalente Menge an Gas über einen Auslass 29 ausgelassen. Dadurch kann das Gaskreislaufsystem 1 mit konstantem Druck betrieben und eine Drucküberbelastung des Systems vermieden werden. Über den Auslass 29 kann das Wärmeaustauschmedium als "Auspuffgas" aus dem Kreislaufsystem 1 abgeführt werden. Allerdings kann das warme Wärmeaustauschmedium auch zum Erwärmen des Impulsgasstroms genutzt werden, wie im Folgenden beschrieben wird.

Wie mit Strichlinien 12a angedeutet ist, kann das aus dem Auslass 29 abgeführte Gas zum Wärmetauscher 12 geführt werden, um Wärme in den Impulsgasstrom einzubringen. Mit anderen Worten: Das abgelassene Wärmeaustauschmedium wird zum Vorwärmen des Impulsgases genutzt, was eine Verbesserung der Energieeffizienz mit sich bringt. Dadurch bleibt die meiste Wärme im Kreislauf und das Auspuffgas kann auf ein ungefährliches Maß heruntergekühlt werden, bevor es aus dem System abgeführt wird. Da die gesamte Energie zum Vorwärmen des Impulsgasstroms aus dem System selber kommt, kann auf externe Heizmittel verzichtet werden. Die Energieeffizienz des gesamten Systems ist dadurch ausgeprochen hoch.

Das Auspuffgas kann aber auch in das System zurückgeführt werden, was durch die Strichlinien 12b angedeutet ist. Nach der Abkühlung im Wärmetauscher 12, kann das gekühlte Abgas in den Verdichter (Kompressor) 10 geleitet werden. Dort wird das gekühlte Wärmeaustauschmedium verdichtet und strömt als Impulsgas durch die Impulsgasleitung 30. Im Wärmetauscher 12 wird das Impulsgas dann wieder aufgewärmt. Aufgrund des heruntergekühlten Gases muss der Verdichter nicht als Sonderkonstruktion für hohe Temperaturen ausgelegt werden. Da das Wärmeaustauschmedium nicht verloren geht, sondern im Kreislauf verbleibt, können auch teure Gase wie Argon, Stickstoff, Helium usw. wirtschaftlich genutzt werden.

Selbstverständlich können noch zusätzliche Vorrichtungen zum Temperieren der Gasströme in das System integriert werden. So kann beispielsweise im Bereich des Wärmetauschers 12 auch ein mit externer Energie beheizter Wärmetauscher vorgesehen sein, beispielsweise in der Verbindung zwischen Steuerungsventil 11 und dem Wärmetauscher 12. Möglich ist ferner ein ein Zusatzkühler (z. B. mit Luft) für die Verbindung 12b, so dass das Gas noch kälter am Kompressor 10 ankommt, wenn die Bilanz zeigen sollte, dass die Temperatur noch zu hoch ist.

**Figur 2** zeigt den Gasströmungsverstärker 8 aus Figur 1. Der Gasströmungsverstärker 8 weist einen Düsenkörper 17 auf, der in Strömungsrichtung 3 einen Strömungskanal 18 mit einer Eintrittsöffnung 19 und einer Austrittsöffnung 20 umfasst. Die Eintrittsöffnung 19 sieht eine Eintrittsquerschnittsfläche 21 vor, die sich in Strömungsrichtung 3 konisch bis zu einer Querschnittsverengung 22 verjüngt. Im Bereich der Querschnittsverengung 22 ist an der inneren Oberfläche des Strömungskanals 18 ein ringförmiger Spalt 23 ausgebildet. Der ringförmige Spalt 23 steht in Fluidverbindung mit einer Ringkammer 24. Die Ringkammer 24 steht in Fluidverbindung mit der Druckluftquelle 9 (Figur 1) und wird von dieser mit unter Druck stehendem Impulsgas versorgt. Die Ringkammer 24 ist mit dem Ringspalt 23 über eine kleine Ringdüse 25 verbunden.

In Strömungsrichtung 3 gesehen bildet die innere Oberfläche des Strömungskanals 18 eine an die Ringdüse 25 anschließende gekrümmte Strömungsleitfläche 26 aus, die auch als Coand 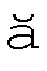 -Leitfläche bezeichnet ist und die eine Umlenkung des ausgestoßenen Impulsgasstroms bewirkt, was durch die Pfeile 27 angedeutet ist. Die Leitfläche 26 erstrecht sich ausgehend vom Düsenabschnitt 25 zunächst radial nach innen in Richtung Mittelachse 28 des Düsenkörpers und erstreckt sich dann, ihrer Krümmung folgend, zunehmend in axialer Richtung in Strömungsrichtung 3. Mit anderen Worten, die Leitfläche besitzt ein in Richtung auf die Mittelachse 28 zunehmend abflachendes Profil.

Die aus der Ringdüse 25 ausgeblasene Luft folgt beim Verlassen der Ringdüse 25 dem in axialer Richtung gekrümmten konvexen Verlauf der Leitfläche 26 und läuft an der Leitfläche 26 entlang, wodurch der Impulsgasstrom, der zunächst radial eingeblasen wird, in axiale Richtung umgelenkt wird (Impulsgasstromumlenkung 27). Dieser als Coandä-Effekt bekannte Mechanismus basiert auf der Tendenz eines Gasstrahls, an einer konvexen Oberfläche entlangzulaufen, anstatt sich abzulösen.

Durch die Umlenkung des Impulsgasstroms in axiale Richtung (Impulsgasstromumlenkung 27) kommt es im Bereich des Düsenzentrums zu einem Unterdruck, der große Mengen an Wärmeübertragungsmedium durch die Eintrittsöffnung 19 ansaugt. Das Wärmeübertragungsmedium wird so im Strömungskanal beschleunigt.

Im Anschluss an die Coandä-Leitfläche 26 in Strömungsrichtung 3 ist der Strömungskanal mit sich in Strömungsrichtung 3 erweiternden Innendurchmesser ausgebildet.

### Bezugszeichenliste

- 1: Gaskreislaufsystem
- 2: Rohrsystem
- 3: Strömungsrichtung
- 4: erster Wärmetauscher
- 5: Brennstoffzelle
- 6: Wärmesenke (zweiter Wärmetauscher)
- 7: Metallhydridtank
- 8: Gasströmungsverstärker
- 9: Druckgasquelle (Druckluftquelle)
- 10: Verdichter
- 11: Steuerungsventil
- 12: Vorwärmelement
- 13: Elektrorohrerhitzer
- 14: Temperaturmesser
- 15: Druckmesser
- 16: Volumenstrommessgerät
- 17: Düsenkörper
- 18: Strömungskanal
- 19: Eintrittsöffnung
- 20: Austrittsöffnung
- 21: Eintrittsquerschnittsfläche
- 22: Querschnittsverengung
- 23: ringförmiger Spalt
- 24: Ringkammer
- 25: Ringdüse
- 26: Coandä-Leitfläche
- 27: Impulsgasstromumlenkung
- 28: Mittelachse
- 29: Auslass
- 30: Impulsgasleitung

## Patentansprüche

1. Gaskreislaufsystem (1) für den Transport von Wärme von einer Hochtemperaturquelle (5), insbesondere Hochtemperaturbrennstoffzelle, zu einem Wärmeverbraucher (7), aufweisend:
ein Rohrsystem (2), durch das ein gasförmiges Wärmeaustauschmedium strömt, wobei ein Teil des Rohrsystems (2) als an die Hochtemperaturquelle (5) angeschlossener Wärmetauscher (4) ausgebildet ist, in dem Wärme aus der Hochtemperaturquelle (5) in das Wärmeaustauschmedium übertragen wird,
wobei ein Teil des Rohrsystems (2) als Wärmesenke (6), in der die auf das Wärmeaustauschmedium übertragene Wärme auf einen Wärmeverbraucher (7) übertragbar ist, oder als Wärmeverbraucher ausgebildet ist,
**dadurch gekennzeichnet, dass** in dem Rohrsystem (2) ein oder mehrere nach dem Coandä-Effekt und/oder dem Venturi-Effekt arbeitende Gasströmungsverstärker (8) vorgesehen sind, die mit unter Druck stehendem Impulsgas gespeist sind, um das Wärmeaustauschmedium in dem Rohrsystem (2) in einer Strömungsrichtung (3) anzutreiben.

2. Gaskreislaufsystem nach Anspruch 1, **dadurch gekennzeichnet, dass** Mittel (12) zum Vorwärmen des Impulsgasstroms vorgesehen sind.

3. Gaskreislaufsystem nach Anspruch 2, **dadurch gekennzeichnet, dass** das Rohrsystem einen Auslass (29) aufweist, um Wärmeaustauschmedium aus dem Rohrsystem (2) abzuführen, wobei der Auslass (29) mit den Mitteln (12) zum Vorwärmen des Impulsgasstroms verbunden ist, so dass die Wärme des abgeführten Wärmeaustauschmediums auf das Impulsgas übertragen werden kann, um dieses vorzuwärmen.

4. Gaskreislaufsystem nach einem der Ansprüche 1 bis 3, **dadurch gekennzeichnet, dass** der Gasströmungsverstärker (8) mit einer Impulsgasleitung (30) zum Zuführen von Impulsgas verbunden ist, wobei das Rohrsystem (2) einen Auslass (29) aufweist, um Wärmeaustauschmedium aus dem Rohrsystem (2) abzuführen, wobei der Auslass (29) mit der Impulsgasleitung (30) verbunden ist, so dass das aus dem Auslass (29) abgeführte Wärmeaustauschmedium als Impulsgas wieder in das Rohrsystem (2) eingespeist wird.

5. Gaskreislaufsystem nach den Ansprüchen 3 und 4, **dadurch gekennzeichnet, dass** die Mittel (12) zum Vorwärmen des Impulsgasstroms derart an die Impulsgasleitung (30) angeschlossen sind, dass das aus dem Auslass (29) abgeführte Wärmeaustauschmedium zunächst Wärme an den Impulsgasstrom abgibt und dann in Strömungsrichtung vor den Mitteln (12) zum Vorwärmen des Impulsgasstroms in die Impulsgasleitung (30) geführt wird, wobei das Wärmeaustauschmedium vorzugsweise über einen Verdichter (10) in die Impulsgasleitung (30) eingeführt wird.

6. Gaskreislaufsystem nach einem der vorhergehenden Ansprüche, **dadurch gekennzeichnet, dass** der Gasströmungsverstärker (8) einen Düsenkörper (17) mit einem Strömungskanal (18) umfasst, wobei der Strömungskanal (18) einen ringförmigen Spalt (23) aufweist, der aus einer Ringkammer (24) mit dem unter Druck stehendem Impulsgas gespeist wird, wobei der Strömungskanal (18) in Strömungsrichtung (3) in Anschluss an den ringförmigen Spalt (24) eine Coand 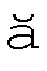 -Leitfläche (26) ausbildet, die derart ausgebildet ist, dass der Impulsgasstrom in Strömungsrichtung (3) umgelenkt wird.

7. Gaskreislaufsystem nach Anspruch 6, **dadurch gekennzeichnet, dass** die Coandä-Leitfläche (26) in Strömungsrichtung (3) gekrümmt ist.

8. Gaskreislaufsystem nach einem der Ansprüche 6 oder 7, **gekennzeichnet durch** einen sich an die Coand 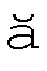 -Leitfläche (26) anschließenden Abschnitt mit sich in Strömungsrichtung (3) erweiterndem Innendurchmesser.

9. Gaskreislaufsystem nach einem der vorhergehenden Ansprüche, **dadurch gekennzeichnet, dass** der Gasströmungsverstärker (8) in Strömungsrichtung (3) des Wärmeaustauschmediums eine Eintrittsöffnung (19) mit einer Eintrittsquerschnittsfläche (21) aufweist, die sich in Strömungsrichtung (3) konisch oder mit einer anderen, sich verjüngenden Form, bis zu einer Querschnittsverengung mit einer minimalen Durchtrittsfläche verjüngt.

10. Gaskreislaufsystem nach einem der vorhergehenden Ansprüche, wobei das Gaskreislaufsystem mit einer Hochtemperaturbrennstoffzelle (5) verbunden ist, **dadurch gekennzeichnet, dass** ein Abgasstrom der Hochtemperaturbrennstoffzelle (5) über den Wärmetauscher (4) läuft.

11. Gaskreislaufsystem nach einem der vorhergehenden Ansprüche, **dadurch gekennzeichnet, dass** ein Metallhydridtank (7) an die Wärmesenke (6) angeschlossen ist, wobei die Wärmesenke (6) vorzugsweise als zweiter Wärmetauscher ausgebildet ist.

12. Gaskreislaufsystem nach einem der vorhergehenden Ansprüche, **dadurch gekennzeichnet, dass** in dem Rohrsystem (2) ein Lufterhitzer (13) vorgesehen ist.

13. Gaskreislaufsystem nach einem der vorhergehenden Ansprüche, **dadurch gekennzeichnet, dass** der Druck des Wärmeaustauschmediums unter 3 bar beträgt.

14. Gaskreislaufsystem nach einem der vorhergehenden Ansprüche, **dadurch gekennzeichnet, dass** der Impulsgasstrom unter 150 Nl/min liegt.

15. Gaskreislaufsystem nach einem der vorhergehenden Ansprüche, **dadurch gekennzeichnet, dass** der Volumenstrom des Wärmeaustauschmediums maximal 1500 Nl/min beträgt.

## Claims

1. Gas circulation system (1) for transporting heat from a high-temperature source (5), in particular a high-temperature fuel cell, to a heat consumer (7), having:
a pipe system (2), through which a gaseous heat transfer medium flows, wherein part of the pipe system (2) is formed as a heat exchanger (4) connected to the high-temperature source (5), in which heat is transferred from the high-temperature source (5) into the heat transfer medium,
wherein part of the pipe system (2) is formed as a heat sink (6), in which the heat transferred to the heat transfer medium can be transferred to a heat consumer (7), or as a heat consumer,
**characterized in that** one or more gas flow enhancers (8) functioning according to the Coand 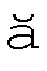 effect and/or the Venturi effect which are supplied with pressurized impulse gas are provided in the pipe system (2), in order to propel the heat transfer medium in the pipe system (2) in a flow direction (3).

2. Gas circulation system according to claim 1, **characterized in that** means (12) for preheating the impulse gas flow are provided.

3. Gas circulation system according to claim 2, **characterized in that** the pipe system has an outlet (29) in order to discharge heat transfer medium from the pipe system (2), wherein the outlet (29) is connected to the means (12) for preheating the impulse gas flow, with the result that the heat of the discharged heat transfer medium can be transferred to the impulse gas in order to preheat it.

4. Gas circulation system according to one of claims 1 to 3, **characterized in that** the gas flow enhancer (8) is connected to an impulse gas line (30) for supplying impulse gas, wherein the pipe system (2) has an outlet (29) in order to discharge heat transfer medium from the pipe system (2), wherein the outlet (29) is connected to the impulse gas line (30), with the result that the heat transfer medium discharged from the outlet (29) is fed back into the pipe system (2) as impulse gas.

5. Gas circulation system according to claims 3 and 4, **characterized in that** the means (12) for preheating the impulse gas flow are connected to the impulse gas line (30) in such a way that the heat transfer medium discharged from the outlet (29) first emits heat to the impulse gas flow and then is guided into the impulse gas line (30) in front of the means (12) for preheating the impulse gas flow in the flow direction, wherein the heat transfer medium is introduced into the impulse gas line (30) preferably via a compressor (10).

6. Gas circulation system according to any of the preceding claims, **characterized in that** the gas flow enhancer (8) comprises a nozzle body (17) with a flow channel (18), wherein the flow channel (18) has an annular gap (23), which is supplied with the pressurized impulse gas from an annular chamber (24),
wherein, following on from the annular gap (24) in the flow direction (3), the flow channel (18) forms a Coand 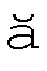 control surface (26) which is formed in such a way that the impulse gas flow is deflected in the flow direction (3).

7. Gas circulation system according to claim 6, **characterized in that** the Coand 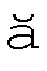 control surface (26) is curved in the flow direction (3).

8. Gas circulation system according to any of claims 6 or 7, **characterized by** a section following on from the Coand 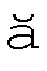 control surface (26) with an inner diameter which widens in the flow direction (3).

9. Gas circulation system according to any of the preceding claims, **characterized in that** the gas flow enhancer (8), in the flow direction (3) of the heat transfer medium, has an inlet opening (19) with an inlet cross-sectional area (21) which tapers conically, or with another tapering shape, in the flow direction (3) up to a cross-section narrowing with a minimal passage surface area.

10. Gas circulation system according to any of the preceding claims, wherein the gas circulation system is connected to a high-temperature fuel cell (5), **characterized in that** a waste gas flow of the high-temperature fuel cell (5) runs over the heat exchanger (4).

11. Gas circulation system according to any of the preceding claims, **characterized in that** a metal hydride tank (7) is connected to the heat sink (6), wherein the heat sink (6) is preferably formed as a second heat exchanger.

12. Gas circulation system according to any of the preceding claims, **characterized in that** an air heater (13) is provided in the pipe system (2).

13. Gas circulation system according to any of the preceding claims, **characterized in that** the pressure of the heat transfer medium is below 3 bar.

14. Gas circulation system according to any of the preceding claims, **characterized in that** the impulse gas flow lies below 150 Nl/min.

15. Gas circulation system according to any of the preceding claims, **characterized in that** the volumetric flow rate of the heat transfer medium is at most 1500 Nl/min.

## Revendications

1. Système de circulation de gaz (1) destiné au transport de la chaleur, depuis une source à haute température (5), en particulier une pile à combustible à haute température, jusqu'à un consommateur de chaleur (7), comprenant :
un système de conduites (2) dans lequel circule un fluide gazeux échangeur de chaleur, une partie du système de conduites (2) étant réalisé sous forme d'échangeur de chaleur (4) qui est raccordé à la source à haute température (5) et dans lequel la chaleur provenant de la source à haute température (5) est transmise au fluide échangeur de chaleur,
une partie du système de conduites (2) étant réalisé sous forme de puits thermique (6), dans lequel la chaleur transmise au fluide échangeur de chaleur peut être transférée à un consommateur de chaleur (7), ou sous forme d'échangeur de chaleur,
**caractérisé en ce que** dans le système de conduites (2), il est prévu un ou plusieurs accélérateurs d'écoulement gazeux (8), fonctionnant avec l'effet Coandâ et/ou l'effet Venturi, qui sont alimentés avec du gaz pulsé sous pression, afin de propulser le fluide échangeur de chaleur dans un sens d'écoulement (3) dans le système de conduites (2).

2. Système de circulation de gaz selon la revendication 1, **caractérisé en ce qu'**il est prévu des moyens (12) de préchauffage du flux de gaz pulsé.

3. Système de circulation de gaz selon la revendication 2, **caractérisé en ce que** le système de conduites présente une sortie (29) destinée à évacuer du fluide échangeur de chaleur du système de conduites (2), la sortie (29) étant reliée aux moyens (12) de préchauffage du flux de gaz pulsé, de sorte que la chaleur du fluide échangeur de chaleur évacué peut être transférée au gaz pulsé, afin de préchauffer celui-ci.

4. Système de circulation de gaz selon l'une des revendications 1 à 3, **caractérisé en ce que** l'accélérateur d'écoulement gazeux (8) est relié à une conduite de gaz pulsé (30) destinée à amener le gaz pulsé, le système de conduites (2) présentant une sortie (29) pour évacuer du fluide échangeur de chaleur du système de conduites (2), la sortie (29) étant reliée à la conduite de gaz pulsé (30), de sorte que le fluide échangeur de chaleur évacué par la sortie (29) est réinjecté en tant que gaz pulsé dans le système de conduites (2).

5. Système de circulation de gaz selon les revendications 3 et 4, **caractérisé en ce que** les moyens (12) de préchauffage du flux de gaz pulsé sont raccordés à la conduite de gaz pulsé (30) de manière à ce que le fluide échangeur de chaleur évacué par la sortie (29) délivre d'abord de la chaleur au flux de gaz pulsé et soit ensuite dirigé dans la conduite de gaz pulsé (30), en amont des moyens (12) dans le sens d'écoulement, pour préchauffer le flux de gaz pulsé, le fluide échangeur de chaleur étant introduit dans la conduite de gaz pulsé (30) en passant de préférence par un compresseur (10).

6. Système de circulation de gaz selon l'une des revendications précédentes, **caractérisé en ce que** l'accélérateur d'écoulement gazeux (8) comprend un corps de buse (17) doté d'un canal d'écoulement (18), le canal d'écoulement (18) présentant une fente (23) annulaire qui est alimentée depuis une chambre annulaire (24) avec le gaz pulsé sous pression,
le canal d'écoulement (18) formant, dans le sens d'écoulement (3), à la suite de la fente (24) annulaire, une surface de guidage Coandâ (26) qui est agencée de manière à ce que le flux de gaz pulsé soit dévié dans le sens d'écoulement (3).

7. Système de circulation de gaz selon la revendication 6, **caractérisé en ce que** la surface de guidage Coandâ (26) est incurvée dans le sens d'écoulement.

8. Système de circulation de gaz selon l'une des revendications 6 ou 7, **caractérisé en ce qu'**il comporte une portion qui fait suite à la surface de guidage Coandâ (26) et dont le diamètre intérieur s'élargit dans le sens d'écoulement (3).

9. Système de circulation de gaz selon l'une des revendications précédentes, **caractérisé en ce que** l'accélérateur d'écoulement gazeux (8) présente, dans le sens d'écoulement (3) du fluide échangeur de chaleur, une ouverture d'entrée (19) qui est dotée d'une aire de section d'entrée (21) et diminue en section dans le sens d'écoulement (3), sous une forme conique ou sous une autre forme convergente, jusqu'à une réduction de section avec une aire de passage minimale.

10. Système de circulation de gaz selon l'une des revendications précédentes, dans lequel le système de circulation de gaz est relié à une pile à combustible à haute température (5), **caractérisé en ce qu'**un flux de gaz de sortie de la pile à combustible à haute température (5) passe par l'échangeur de chaleur (4).

11. Système de circulation de gaz selon l'une des revendications précédentes, **caractérisé en ce qu'**un réservoir d'hydrure métallique (7) est raccordé au puits thermique (6), le puits thermique (6) étant de préférence réalisé sous la forme d'un deuxième échangeur de chaleur.

12. Système de circulation de gaz selon l'une des revendications précédentes, **caractérisé en ce qu'**un réchauffeur d'air (13) est prévu dans le système de conduites (2).

13. Système de circulation de gaz selon l'une des revendications précédentes, **caractérisé en ce que** la pression du fluide échangeur de chaleur est inférieur à 3 bars.

14. Système de circulation de gaz selon l'une des revendications précédentes, **caractérisé en ce que** le flux de gaz pulsé est inférieur à 150 Nl/min.

15. Système de circulation de gaz selon l'une des revendications précédentes, **caractérisé en ce que** le débit volumique du fluide échangeur de chaleur est au maximum de 1 500 Nl/min.
